# EUROPEAN PATENT SPECIFICATION

(11) **EP 1 599 017 B1**
(45) Date of publication and mention of the grant of the patent: **25.04.2012**
(21) Application number: 05252685.2
(22) Date of filing: 29.04.2005
(51) Int. Cl.: H04L 29/06

(54) **Securing web services**
Sichern von Netzdienstleistungen
Assurer des services de réseau

(30) Priority: 19.05.2004 US 849487
(43) Date of publication of application: 23.11.2005
(73) Proprietor: Alcatel Lucent, 75007 Paris (FR)
(72) Inventor: van Bemmel, Jeroen, 7546 CC Enschede (NL); Wegdam, Maarten, 7511 KG Enschwede (NL); Vemuri, Kumar Venkata, Naperville, IL 60563 (US); Murphy, George Ransom, Apex, NC 27502 (US); Varney, Douglas William, Naperville, IL 60540 (US)
(74) Representative: Sarup, David Alexander

(56) References cited:
- US-A1- 2004 088 352
- US-A1- 2004 093 515
- TSAI W T ET AL: "Verification of web services using an enhanced UDDI server" OBJECT-ORIENTED REAL-TIME DEPENDABLE SYSTEMS, 2003. (WORDS 2003). PROCEEDINGS OF THE EIGHTH INTERNATIONAL WORKSHOP ON JAN 15-17, 2003, PISCATAWAY, NJ, USA,IEEE, 15 January 2003 (2003-01-15), pages 131-138, XP010648743 ISBN: 0-7695-1929-6

## Description

### BACKGROUND OF THE INVENTION

### 1. FIELD OF THE INVENTION

This invention relates generally to telecommunications, and more particularly, to wireless communications.

### 2. DESCRIPTION OF THE RELATED ART

When offering services, such as Web Services, security in offering those services is one the key concerns. For example, security is essential to guarantee and protect revenues, complying with various legislations. In other words, it is vital to any company doing business based on services. To provide secure services to requestors, enormous amounts of literature, standardization, solutions, architectures, etc have been invented and proposed by many companies.

However, providing a secure environment to render services within organizations, across enterprises, and across the Internet involves authentication, authorization, privacy, trust, integrity, confidentiality, secure communication channels across a wide spectrum of application and business topologies. Therefore, mechanisms for enabling secure services require solutions to both technological (secure messaging) and business process (policy, risk, trust) issues which require coordinated efforts by platform vendors, application developers, network and infrastructure providers, and customers. Thus, evolving Service Delivery Platforms and Intelligent Networks delivering secure services across evolving networks and next generation applications is one of the challenges. More so, developing secure value added services in order to create a competitive advantage and assure new revenue streams is another challenge.

Generally, Web Services are open-standard (eXtensible Markup Language (XML), Simple Object Access Protocol (SOAP), etc.) based web applications that interact with other web applications for the purpose of exchanging data. Initially used for the exchange of data on large private enterprise networks, Web Services are evolving to include transactions over the public Internet. For example, Lucent Technologies' *MiLife*™ VoiceXML Gateway provides telephone access to voice-enabled Web Services. It retrieves VoiceXML formatted·content from web servers, converting it into interactive voice dialogs with end users via fixed or mobile phones.

Service providers, telecom operators, and IT departments are all beginning to use Web Services as a standardized base technology for specifying and offering service interfaces. Anyone developing such interfaces must address a key issue: who (which party) gets access to those interfaces, and under what conditions. Associated issues are tamper-proof identification of requestors (who is calling), machine-readable and enforcable specification of access rights and restrictions, and enabling of cross-domain operation.

Core Web Services specifications include SOAP and Web Services Definition Language (WDSL) both of which were standardized around the end of the 20^{th} century. Both standards specify ways to use a syntax based on eXtensible Markup Language (XML) to invoke respectively Web Services. Since then, a number of standards have been created addressing various aspects of security concerns related to Web Services. These include WS-Security, XML signature and the like. For example, X.509v3 certificates can be used for mutual identification of both requestor and target service provider. HTTPS is a transport protocol suitable in this context. Kerberos is an architecture that uses signed tokens for authenticated access to resources, and eXtensible Access Control Markup Language (XACML) is an XML format used to express policies, and policy decision requests / replies. Finally, Security Assertion Markup Language (SAML) is another specification that specifies a format for an (optionally signed) XML token containing the identity of a requestor.

SOAP is silent on the semantics of any application-specific data it conveys, as it is on issues such as the routing of SOAP messages, reliable data transfer, firewall traversal, etc. SAML introduces the concept of a signed token containing identity and authorization information. However, it does not specify how to use this token in a larger context, or how to combine it with service discovery to achieve efficiency and scalability benefits. Furthermore, SAML suggests the use of a request reply based protocol upon every service access. In summary, SAML is a protocol specification, not an architecture or solution. Therefore, an architecture that provides a clear and convincing solution to implement a scalable access-control framework for Web Services is a missing link in many standards specifications.

US 2004/093515 provides a model for authentication and authorization of users and applications that use network services. A client requests a ticket by providing credentials. An authentication adapter in a receiving server deserializes the request into a data structure that provides access to the security ID and password attributes, and passes these attributes to an ID management system to perform authentication. The credentials also determine the user's or application's privileges. The authentication adapter constructs a ticket object for the client incorporating the privileges and other information, e.g., the security ID and a date/time stamp. The ticket object is serialized, encrypted, encoded for transmission and inserted into an appropriately-formatted message and returned to the requesting client. The client attaches the authentication ticket to subsequent service requests that require authentication. To validate the ticket, the ticket object is reconstructed from the request data.

The present invention is directed to overcoming, or at least reducing, the effects of, one or more of the problems set forth above.

### SUMMARY OF THE INVENTION

A method and apparatus according to the present invention are set out in the independent claims, to which the reader is now referred. Preferred features are laid out in the dependent claims.

In one embodiment of the present invention, a method for securing a Web Service is provided that separates access control policies from the actual services. The method comprises discovering a Web Service in response to a service request and determining an access policy for the Web Service separately from the actual service based on the service request.

In another embodiment, a computer readable medium comprising programming instructions for a web server coupled to a network for serving service requests is provided. The web server is linked to a plurality of clients. The programming instructions comprise discovering the Web Service in response to a service request and determining an access policy for the Web Service separately from the actual service based on the service request.

In yet another embodiment, a web server for serving Web Services to a plurality of clients linked via a network comprises an interface coupled to a cache for storing identity and access policy information, an access controller including a policy engine to evaluate access policies and encode its decision in a security token, and a module for securing a Web Service based on an access policy determined for the Web Service separately from the actual service based on a service request.

In still another embodiment, a system for securing a Web Service comprises a client that sends a service request for a Web Service over a network and a web server coupled to the network to serve the Web Service across different administrative domains based on a pre-computed policy.

In another embodiment, a method on a server linked to a network of a plurality of clients, comprises receiving a service request from a client, using a first access controller element to discover a service in response to the service request, and using a second access controller element which separates access control enforcement from the actual service based on the service request.

### BRIEF DESCRIPTION OF THE DRAWINGS

The invention may be understood by reference to the following description taken in conjunction with the accompanying drawings, in which like reference numerals identify like elements, and in which:
Figure 1 illustrates a stylized representation of a system for securing a Web Service;
Figure 2 illustrates a stylized representation of a method for securing a Web Service;
Figure 3 illustrates a stylized representation of a Web Service system for securing a Web Service according to scalable policy-based Web Services security architecture;
Figure 4 illustrates a stylized representation of a Web Service access control and authorization architecture; and
Figure 5 illustrates a stylized representation of a method for securing a Web Service based an on an access policy determined for the Web Service separately from the actual service based on a service request.

### DETAILED DESCRIPTION OF SPECIFIC EMBODIMENTS

Illustrative embodiments of the invention are described below. In the interest of clarity, not all features of an actual implementation are described in this specification. It will of course be appreciated that in the development of any such actual embodiment, numerous implementation-specific decisions must be made to achieve the developers' specific goals, such as compliance with system-related and business-related constraints, which will vary from one implementation to another. Moreover, it will be appreciated that such a development effort might be complex and time-consuming, but would nevertheless be a routine undertaking for those of ordinary skill in the art having the benefit of this disclosure.

Generally, a scalable, policy-based web-services security architecture that incorporates a combination of existing network elements, protocols, and concepts is provided. The web-services security architecture advantageously employs a combination of authentication with service discovery, evaluation of access policies, and capturing the result of this process in a signed, security token allowing efficient processing for each service request. A policy engine connected to a smart Universal Description, Discovery and Integration (UDDI) element evaluates access policies and encodes its decision in the security token according to one embodiment of the present invention. By encoding all information required to take the decision into the security token itself, a scalable access-control framework for Web Services is provided. This results in a pre-computed policy. An access controller uses the pre-computed policy to evaluate access conditions in the context of the actual request. In this manner, a scalable access control framework for Web Services may be implemented.

According to one embodiment of the present invention, a Web Service in response to a service request is discovered. For example, given a Uniform Resource Locator (URL) to a discovery document residing on a web server, a developer of a client application can learn that a Web Service exists, what its capabilities are, and how to properly interact with it. This process is known as Web Service discovery and may be based on a Universal Description Discovery Integration (UDDI) query Application Programming Interface (API) for locating services. However, the access policy for the Web Service is separately determined from the actual service based on the service request. Cost of the authentication and access policy evaluations may be amortized over many service requests in a Web Service system. A Simple Object Access Protocol (SOAP) and a Security Assertion Markup Language (SAML) based Web Service system is described herein in the context of secure fine-grained access control to Web Services, across different administrative domains. However, those skilled in the art will appreciate that the principles of the present invention can also be applied to other Web Service systems.

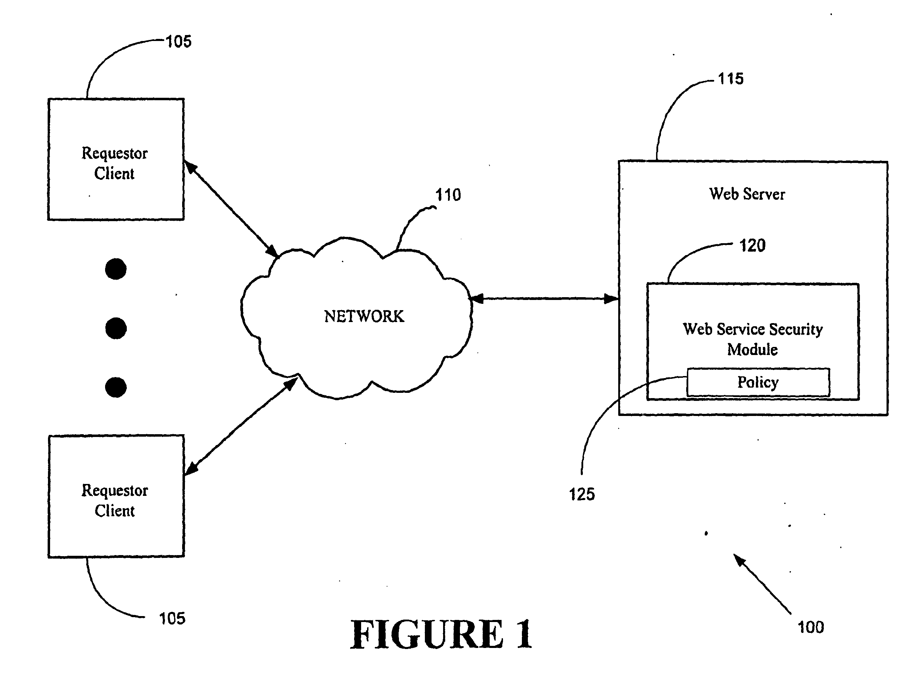

Turning now to the drawings, and referring specifically to Figure 1, a stylized representation of a system 100 that may be employed for securing a Web Service is illustrated. The system 100 comprises a plurality of requestor clients 105 linked via a network 110 to a web server 115. The web server 115 includes a Web Service security module 120 for securing a Web Service based on an access policy 125 determined for the Web Service separately from the actual service based on a service request, in accordance with one embodiment of the present invention. The access policy 125 may be a set of domain-specific policy statements where a policy statement may be a group of policy assertions such that a policy assertion may represent an individual preference, requirement, capability or alike. For example, policy-based telephone access to voice-enabled Web Services may be provided in one embodiment.

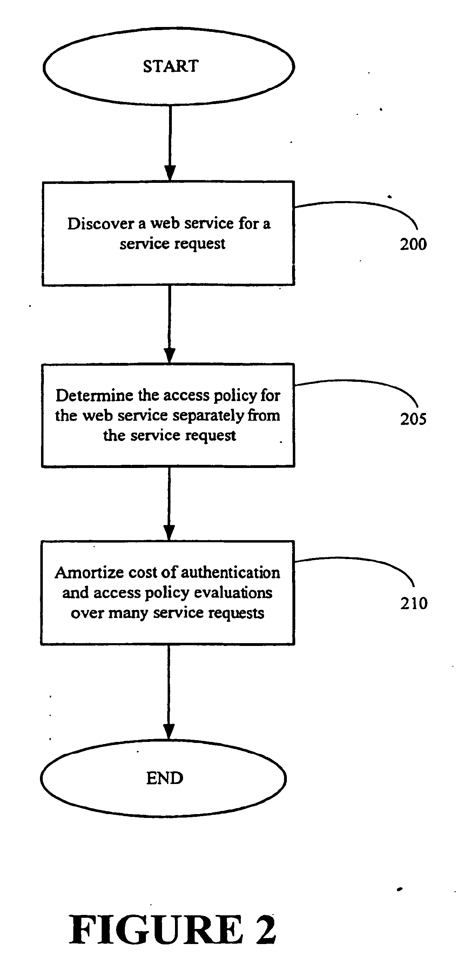

Referring to Figure 2, a stylized representation of a method for securing a Web Service according to one embodiment of the present invention is depicted. At block 200, a Web Service based upon a service request may be discovered by the Web Service security module 120. At block 205, upon discovery of the Web Service, the access policy 125 for the Web Service may be determined separately from the service request. At block 210, to efficiently process service requests, the Web Service security module 120 may amortize the cost of the authentication and access policy evaluations over many service requests consistent with one embodiment of the present invention.

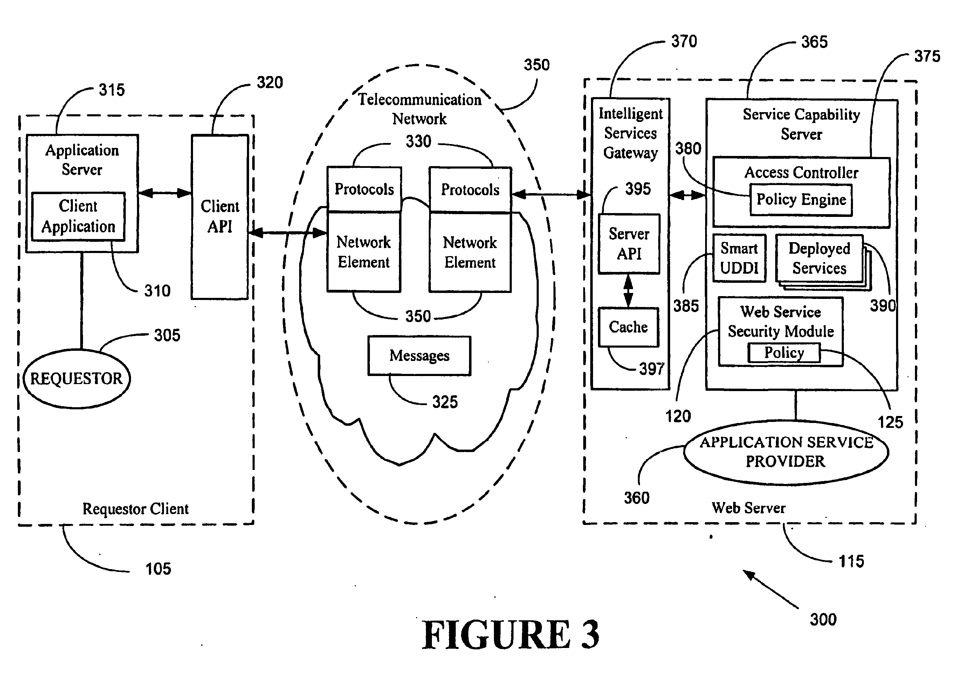

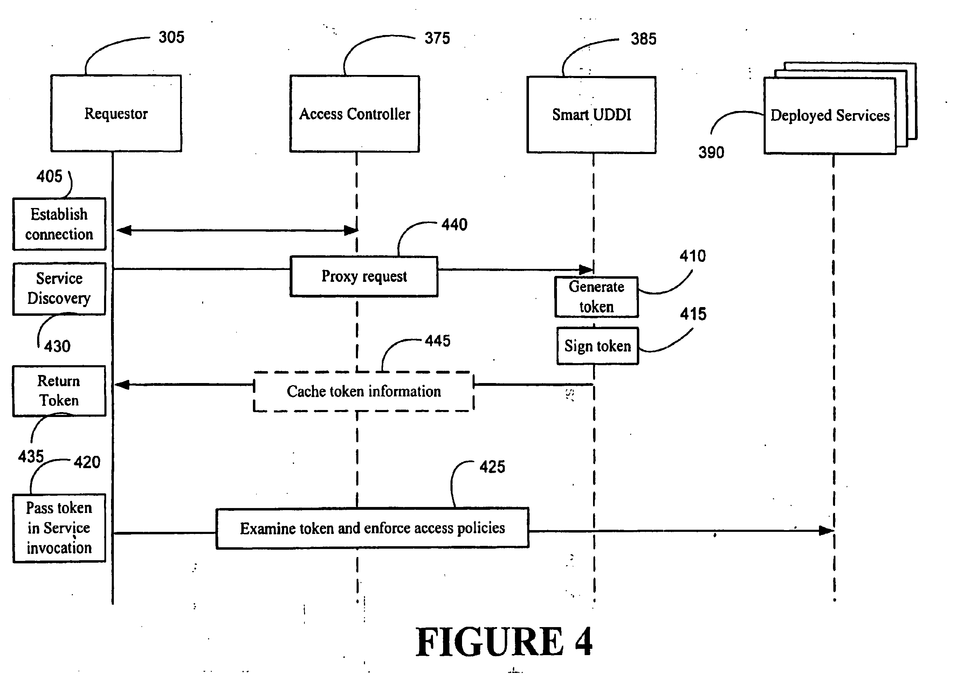

In one embodiment, for Web Service discovery and selection, the Web Service registration proceeds as in a regular UDDI case having periodic updates with dynamic service load information. The Web Service requestor, the requestor client 105, connects with a UDDI registry which may be part of a UDDI module (as shown in Figures 3 and 4) and authenticates. The Web Service requestor sends registry service discovery criteria. The UDDI registry factors in search criteria along with authenticated identity and applies policies (e.g., the access policy 125) in the Web Service security module 120.

Consistent with one embodiment, the UDDI registry may be implemented based on the specification developed by the Universal Description Discovery Integration (UDDI) standard. The UDDI registry is a core element of the infrastructure that supports Web Services. The UDDI registry provides a place for a company to register its business and the services that it offers. People or businesses that need a service, such as a Web Service can use this registry to find a business that provides the service.

Next, the UDDI registry generates a service ticket, returns it with discovered service list to the Web Service requestor (e.g., the requestor client 105). The Web Service requestor connects with a Web Service over authenticated or unauthenticated connection (depends on service) and presents ticket. Thereafter, the service request response interactions proceed. The Web Service uses signed information in the ticket as requests are processed. (i.e. ticket contains "pre-computed" policies).

To accomplish Web Service discovery and selection, in one embodiment, an additional proprietary HTTP header may be used that encodes this new information. Alternatively, a Uniform Resource Locator (URL) may be encoded with extra parameters (e.g., FAT URL). In either case, the specific parameters used would be encrypted or otherwise made selectively accessible to the web server 115 and the Web Service.

In another embodiment, back-office channels may be used for the Web Service discovery and selection process. A back-office channel communication may contain the same information as in the ticket. However, after the UDDI registry factors in search criteria along with authenticated identity and applies policies, the UDDI registry returns the list of discovered services to the Web Service requestor. The Web Service requestor connects to the Web Service and makes requests. The Web Service applies local policies, or connects to the UDDI registry over back-office channels, and requests treatment information. In this manner, requests are processed and responses are returned.

After discovering the Web Service, one or more invocations to the Web Service may be sent in one embodiment of the present invention. A pre-computed policy may be used by the web server security module 120 for determining the access policy 125 for the Web Service. In doing so, access policies for the Web Service may be evaluated to determine identity and access policy information by the Web Service security module 120. The identity and access policy information may be encoded in a security token based on the pre-computed policy. The Web Service security module 120 may capture the security token in a signed security token for use with each subsequent service request in some embodiments of the present invention.

Referring to Figure 3, a Web Service system 300 is depicted for securing a Web Service in accordance with one embodiment of the present invention. The requestor client 105 may comprise a requestor 305 capable of running a client application 310 on an application server using a client Application Programming Interface (API) 320 in accordance with one embodiment of the present invention. The network 110 may comprise network resources to carry messages from the requestor client 105 to the web server 115. Network resources may include protocols 330 and network elements 335 in a communication network 350.

One of the protocols 330 that may be deployed in the Web Service system 300 is SOAP. The SOAP protocol (e.g., Version 1.2) provides a definition of the XML-based information which can be used for exchanging structured and typed information between peers in a decentralized, distributed environment. The SOAP protocol is fundamentally a state-less, one-way message exchange paradigm, but applications can create more complex interaction patterns (e.g., request/response, request/multiple responses, etc.) by combining such one-way exchanges with features provided by an underlying protocol and/or application-specific information. The SOAP protocol provides the framework by which application-specific information may be conveyed in an extensible manner. Also, the SOAP protocol provides a description of the required actions taken by a SOAP node on receiving a SOAP message.

The SOAP protocol defines a SOAP envelope, which is a construct that defines an overall framework for representing the contents of a SOAP message (e.g., messages 325), identifying who should deal with all or part of it, and whether handling such parts are optional or mandatory. It also defines a protocol binding framework, which describes how the specification for a binding of SOAP onto another underlying protocol may be written. The SOAP protocol further defines a data model, a particular encoding scheme for data types which may be used for conveying remote procedure calls (RPC), as well as one concrete realization of the underlying protocol binding framework. This binding allows the exchange of SOAP messages either as payload of a HTTP POST request and response or as a SOAP message in the response to a HTTP GET.

The web server 115 for an application service provider 360 may include a service capability server 365 coupled to an intelligent services gateway 370 in accordance with one embodiment of the present invention. The service capability server 365 may comprise an access controller 375 including a policy engine 380, a smartUDDI 385 and deployed services 390. While the access controller 375 may authenticate and enforce the access policy 125, the policy engine 380 may evaluate access policies and encode its decision in a security token. More specifically, the smartUDDI 385 authenticates, authorizes, applies policy, achieves load balance by tracking dynamic information of each service instance and return response. While the Web Service security module 120 authenticates and provides service, the client application 310 authenticates and makes requests.

The smartUDDI 385 based on the UDDI specification enables businesses to quickly, easily, and dynamically find and transact with one another. The smartUDDI 385 enables a business to (i) describe its business and its services, (ii) discover other businesses that offer desired services, and (iii) integrate with these other businesses. For example, private implementations of UDDI registries are those that are compliant with the UDDI specification and reside within intranets, extranets or private networks on the Internet. They may offer functionality and services oriented or tailored for a specific set of authorized users.

Based on the access policy 125, the Web Service security module 120 may secure a Web Service according to an access policy indicated by the policy engine 380. The intelligent services gateway 370 may comprise a server Application Programming interface (API) 395 coupled to a cache 397. While the server API 395 may enable communications with the client application 310, the cache 397 may store identity and access policy information.

In operation, the client application 310, residing on the application server 315 may access the service capability server 365 using the client API 320 over the communication network 350 through the server API 395. Both the APIs 320, 395 provide the communication means, between the client application 310 and the service capability server 365, for one or more messages 325 to go over the communication network 350 using the protocols 330 on the network elements 335. In this way, the client application 310 may become independent from the underlying network resources including, but not limited to, the protocols 330 and the network elements 335. The service capability server 365 may provide the client application 310 with service capability features in accordance with one embodiment of the present invention.

The intelligent services gateway 370 may provide a standard way for carriers to open their network resources (the protocols 330 and the network elements 335) to the application service provider 360 or third-party client application developers. In this manner, the intelligent services gateway 370 may hide the details of the underlying network resources and shield the application developers from the complexities of the communication network 350.

In accordance with one embodiment of the present invention, the intelligent services gateway 370 may provide a set of Open Services Architecture (OSA) methods for the server API 395 to provide secure access to the underlying network resources. The server API 395 may be defined by OSA standard in one embodiment. The client application 310 may send a service request from the requestor 305 to the intelligent services gateway 370 over the communication network 350 via the client API 320. The service capability server 365 may provide the interface and functionality to interact with the network elements 335.

Examples of the client application 310 include location of a user identification and call routing. Using the intelligent services gateway 370 and the service capability server 365, the client application 310 may have access to the location of a user. The client application 310 may then notify a third party, when that user moves outside or inside a specified area, for advertising client applications. Likewise, the client application 310 may combine Internet based Web Services with intelligent network functionality such as call routing.

Advantageously, in some embodiments of the present invention, the Web Service system 300 brings the advantages of a web-based development and content delivery to the content application 310, creating new value-added service opportunities for telecommunications service providers. For example, voice portals and network-hosted services can generate revenues from additional minutes of use at premium rate tariffs, end user subscription fees and revenue sharing agreements with content partners. End users gain universal and easy access to services via simple user interfaces. The delivery of personalized and dynamically updated Internet content to subscribers can lead to increased minutes of phone use and greater customer retention. The intelligent services gateway 370 architecture separates content development from the service delivery mechanism, so the application service provider 360 (e.g., operators of telephony equipment) and content providers (owners of services) can focus on their core expertise.

Referring to Figure 4, a web-services security architecture is depicted in accordance with one embodiment of the present invention. In this architecture, the requestor 305 discovers a service before sending one or more service invocations to that service. That is, a particular service access pattern is assumed for the realization of efficiency gains. In this manner, the discovery is done once, followed by potentially many service invocations. As a result, the cost of relatively expensive authentication and access policy evaluations may be amortized over many service requests. Thus, the expensive calculations are done once as part of the discovery process. The results of these calculations may be cached in a signed access token and reused for every service invocation.

In one embodiment, using a client server certificate, such as X.509v3 based on HyperText Transfer Protocol over SSL Specification (HTTPS) connection characteristics is formed in response to a service request by the requestor 305 to the access controller 375, as shown in block 405. In one embodiment, the HTTP protocol enables moving of hypertext files across the World Wide Web or Internet, using a HTTP client program on one end, and an HTTP server program on the other end.

As indicated in block 410, the smartUDDI 385 generates a token. The smartUDDI 385 signs the token, encoding the identity in block 415. As shown in block 420, the requestor 305 passes the token in service invocation to the deployed services 390. The access controller 375, in block 425, examines the token and enforces access policies for the deployed service 390. As a result, access check for each service request becomes an efficient, local operation, without, for example, needing to go to an external database or query another server. That is, the service invocation operation essentially becomes state-less, meaning that the access controller 375 and the deployed services 390 may easily be replicated for increased scalability in accordance with one embodiment of the present invention.

At block 430, the requestor 305 discovers a service before sending one or more service invocations to that service. The token is returned at block 435 and the access controller 375 issues a proxy request to the smartUDDI 385 for the requestor 305 in block 440. The access controller 375 caches token information from the smartUDDI 445 for the requestor 305 at block 445.

In this manner, the Web Service may be deployed in different administrative domains because the access policy 125 is determined separately from the actual service, this allows third party hosting of services, while the application service provider 360 retains control. Because the Web Services requests travel through the access controller 375, they are subject to security checks. However, for operation across different administrative domains, it is possible that the access controller element used for discovery is different from the one used for service invocations in some embodiments of the present invention.

In one embodiment, an administrative domain may be network elements grouped together under the same administrative controls. For quality of service enforcement purposes, a network domain refers to any domain that shares a common Quality of Service (QoS) policy. An administrative domain may overlap other domains (i.e. NT or IP). For example, a section of the Internet or a local network under the control of one administrator or authority may form an administrative management domain. A single administrative domain may include more than one server (computer or system that acts as a host or provides other resources on the Net) and may be addressed by one or more domain names (Network addresses). It might also have multiple administrators.

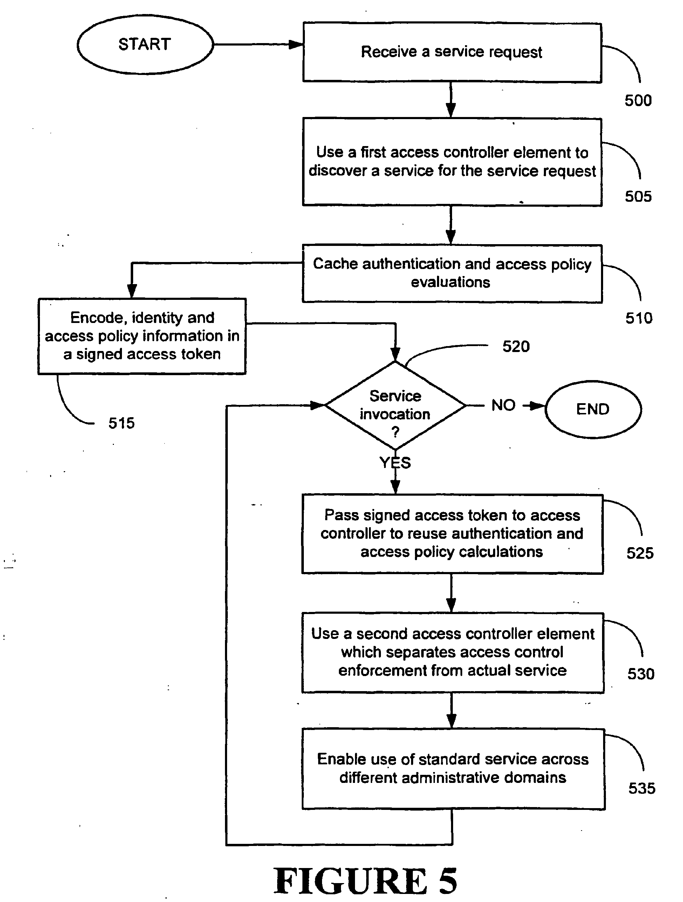

Referring to Figure 5, a stylized representation of a method for securing a Web Service includes receiving a service request, at block 500, by the web server 115, in accordance with one embodiment of the present invention. At block 505, a first access controller element 375 and a smartUDDI 385 may be used by a requestor 305 to discover a service and obtain a signed access token. Then the requestor 305 would then utilize the deployed service 390 via a second access controller element 375, which would enforce this policy separately from the deployed service 390. At block 510, the web server 115 may cache the authentication and access policy evaluations in the cache 397. The smartUDDI 385, at block 515, may encode the identity and access policy information in a signed access token.

At diamond 520, a determination as to service invocation may be made. If a service invocation is indicated at the diamond 520, at block 525, the requestor 305 may pass the signed access token to the access controller 375 to reuse authentication and access policy calculations. At block 530, the access controller 375, using a second access controller element, may separate access control enforcement from the actual service based on the service request. At block 535, use of standard service across different administrative domains may be enabled. Depending on any pending service invocations, an attempt to determine any subsequent service invocation may be made at the diamond 520.

Those skilled in the art will appreciate that the various system layers, routines, or modules illustrated in the various embodiments herein may be executable control units. The control units may include a microprocessor, a microcontroller, a digital signal processor, a processor card (including one or more microprocessors or controllers), or other control or computing devices as well as executable instructions contained within one or more storage devices. The storage devices may include one or more machine-readable storage media for storing data and instructions. The storage media may include different forms of memory including semiconductor memory devices such as dynamic or static random access memories (DRAMs or SRAMs), erasable and programmable read-only memories (EPROMs), electrically erasable and programmable read-only memories (EEPROMs) and flash memories; magnetic disks such as fixed, floppy, removable disks; other magnetic media including tape; and optical media such as compact disks (CDs) or digital video disks (DVDs). Instructions that make up the various software layers, routines, or modules in the various systems may be stored in respective storage devices. The instructions, when executed by a respective control unit, causes the corresponding system to perform programmed acts.

The particular embodiments disclosed above are illustrative only, as the invention may be modified and practiced in different but equivalent manners apparent to those skilled in the art having the benefit of the teachings herein. Furthermore, no limitations are intended to the details of construction or design herein shown, other than as described in the claims below. It is therefore evident that the particular embodiments disclosed above may be altered or modified and all such variations are considered within the scope of the invention. Accordingly, the protection sought herein is as set forth in the claims below.

## Claims

1. A method for securing a Web Service (390) provided by a Web server (115) for a client (105), the method comprising:
discovering (200) the Web Service (390) in response to an initial service request from the client for the Web Service (390); and
determining (205) an access policy (125) for the Web Service (390) separately from the actual service based on a subsequent service request from the client (105) for invocation of the Web service (390).

2. A method, as set forth in Claim 1, wherein determining the access policy for the Web Service (390) separately from the actual service based on the service request further comprises÷ using a pre-computed policy.

3. A method, as set forth in Claim 2, wherein using a pre-computed policy further comprises:
evaluating access policies (125) for the Web Service (390) to determine identity and access policy information; and
encoding the identity and access policy information in a security token (410) based on said pre-computed policy.

4. A method, as set forth in Claim 1, the method comprising:
serving the Web Service (390) across different administrative domains based on a pre-computed policy.

5. A method, as set forth in Claim 1, the method comprising:
using (505) a first access controller element (375) to discover the Web Service (390); and
using (530) a second access controller element (385) which separates access control enforcement from the actual service based on the service request.

6. A computer readable medium comprising programming instructions for a web server (115), the programming instructions, when executed, performing a method comprising:
discovering (200) a Web Service (390) on the Web server (115) in response to a service request from a client; and
determining an access policy (125) for the Web Service (390) separately from the actual service based on a subsequent service request from the client (105) for invocation of the Web service (390).

7. A web server (115) for serving Web Services (390) to a plurality of clients (105), the web server comprising:
an interface (395) coupled to a cache (397) for storing identity and access policy (125) information;
an access controller (375) including a policy engine (380) to evaluate access policies (125) and encode its decision in a security token; and (125)
a module (120) for securing a Web Service (390) based on an access policy (125) determined for the Web Service (390) separately from the actual service based on a subsequent service request from the client (105) for invocation of the Web Service (390).

8. A web server according to Claim 7, wherein the access controller (375) discovers the Web Service (390) in response to the service request.

9. A web server according to Claim 7, wherein the module sends one or more invocations (440, 425) to the.Web Service (390) after discovering the Web Service (390).

## Patentansprüche

1. Verfahren zum Sichern einer von einem Web-Server (115) für einen Client (105) bereitgestellten Netzdienstleistung (390), wobei das Verfahren umfasst:
Entdecken (200) der Netzdienstleistung (390) in Reaktion auf eine von dem Client ausgegebene anfängliche Dienstleistungsanforderung für die Netzdienstleistung (390); und
Ermitteln (205) einer von der momentanen Dienstleistung getrennten Zugriffsrichtlinie (125) für die Netzdienstleistung (390) auf der Basis einer anschließenden Dienstleistungsanforderung von dem Client (105) für den Aufruf der Netzdienstleistung (390).

2. Verfahren nach Anspruch 1, wobei das Ermitteln der von der momentanen Dienstleistung getrennten Zugriffsrichtlinie für die Netzdienstleistung (390) auf der Basis der Dienstleistungsanforderung weiterhin das Verwenden einer vorausberechneten Richtlinie umfasst.

3. Verfahren nach Anspruch 2, wobei das Verwenden einer vorausberechneten Richtlinie weiterhin umfasst:
Bewerten von Zugriffsrichtlinien (125) für die Netzdienstleistung (390), um Informationen über die Identität und die Zugriffsrichtlinie zu ermitteln; und
Codieren der Informationen über die Identität und die Zugriffsrichtlinie in einem Sicherheits-Token (410) auf der Basis der besagten vorausberechneten Richtlinie.

4. Verfahren nach Anspruch 1, wobei das Verfahren umfasst:
Bereitstellen der Netzdienstleistung (390) über unterschiedliche administrative Domains auf der Basis einer vorausberechneten Richtlinie.

5. Verfahren nach Anspruch 1, wobei das Verfahren umfasst:
Verwenden (505) eines ersten Zugriffssteuerungselements (375) für die Entdeckung der Netzdienstleistung (390); und
Verwenden (530) eines zweiten Zugriffssteuerungselements (385), welches die Durchführung der Zugriffssteuerung von der momentanen Dienstleistung auf der Basis der Dienstleistungsanforderung trennt.

6. Computerlesbares Medium mit Programmieranweisungen für einen Web-Server (115), wobei die Programmieranweisungen bei deren Ausführung ein Verfahren durchführen, welches umfasst:
Entdecken (200) einer Netzdienstleistung (390) auf dem Web-Server (115) in Reaktion auf eine Dienstleistungsanforderung von einem Client; und
Ermitteln einer von der momentanen Dienstleistung getrennten Zugriffsrichtlinie (125) für die Netzdienstleistung (390) auf der Basis einer anschließenden Dienstleistungsanforderung von dem Client (105) für den Aufruf der Netzdienstleistung (390).

7. Web-Server (115) zum Bereitstellen von Netzdienstleistungen (390) an eine Mehrzahl von Clients (105), wobei der Web-Server umfasst:
Eine Schnittstelle (395), welche an einen Cache (397) für die Speicherung von Informationen in Bezug auf die Identität und die Zugriffsrichtlinie (125) gekoppelt ist;
eine Zugriffssteuerung (375) mit einer Richtlinien-Engine (380) für die Bewertung von Zugriffsrichtlinien (125) und die Codierung ihrer Entscheidung in einem Sicherheits-Token; und
ein Modul (120) zum Sichern einer Netzdienstleistung (390) auf der Basis einer für die Netzdienstleistung (390) von der momentanen Dienstleistung getrennt ermittelten Zugriffsrichtlinie (125) auf der Basis einer anschließenden Dienstleistungsanforderung von dem Client (105) für den Aufruf der Netzdienstleistung (390).

8. Web-Server nach Anspruch 7, wobei die Zugriffssteuerung (375) die Netzdienstleistung (390) in Reaktion auf die Dienstleistungsanforderung entdeckt.

9. Web-Server nach Anspruch 7, wobei das Modul nach dem Entdecken der Netzdienstleistung (390) einen oder mehrere Aufrufe (440, 425) an die Netzdienstleistung (390) sendet.

## Revendications

1. Procédé de sécurisation d'un service Web (390) fourni par un serveur Web (115) pour un client (105), le procédé comprenant les étapes suivantes :
découvrir (200) le service Web (390) en réponse à une demande de service initiale du client pour le service Web (390) ; et
déterminer (205) une politique d'accès (125) pour le service Web (390) séparément du service réel basé sur une demande de service ultérieure du client (105) pour appeler le service Web (390).

2. Procédé, selon la revendication 1, dans lequel la détermination de la politique d'accès pour le service Web (390) séparément du service réel basé sur la demande de service comprend en outre l'utilisation d'une politique précalculée.

3. Procédé, selon la revendication 2, dans lequel l'utilisation d'une politique précalculée comprend en outre les étapes suivantes :
évaluer des politiques d'accès (125) pour le service Web (390) afin de déterminer des informations d'identité et de politique d'accès ; et
coder les informations d'identité et de politique d'accès dans un jeton de sécurité (410) en se basant sur ladite politique précalculée.

4. Procédé, selon la revendication 1, le procédé comprenant l'étape suivante :
desservir le service Web (390) sur différents domaines administratifs en se basant sur une politique précalculée.

5. Procédé, selon la revendication 1, le procédé comprenant les étapes suivantes :
utiliser (505) un premier élément de contrôle d'accès (375) pour découvrir le service Web (390) ; et
utiliser (530) un deuxième élément de contrôle d'accès (385) qui sépare l'application de contrôle d'accès du service réel basé sur la demande de service.

6. Support lisible par ordinateur comprenant des instructions de programmation pour un serveur web (115), les instructions de programmation, lorsqu'elles sont exécutées, mettant en oeuvre un procédé comprenant les étapes suivantes :
découvrir (200) un service Web (390) sur le serveur Web (115) en réponse à une demande de service d'un client ; et
déterminer une politique d'accès (125) pour le service Web (390) séparément du service réel basé sur une demande de service ultérieure du client (105) pour appeler le service Web (390).

7. Serveur web (115) pour fournir des services Web (390) à une pluralité de clients (105), le serveur web comprenant :
une interface (395) couplée à une antémémoire (397) pour stocker des informations d'identité et de politique d'accès (125) ;
un contrôleur d'accès (375) comprenant un moteur de politiques (380) pour évaluer des politiques d'accès (125) et coder sa décision dans un jeton de sécurité ; et
un module (120) pour sécuriser un service Web (390) basé sur une politique d'accès (125) déterminée pour le service Web (390) séparément du service réel basé sur une demande de service ultérieure du client (105) pour appeler le service Web (390).

8. Serveur web selon la revendication 7, dans lequel le contrôleur d'accès (375) découvre le service Web (390) en réponse à la demande de service.

9. Serveur web selon la revendication 7, dans lequel le module envoie un ou plusieurs appels (440, 425) au service Web (390) après avoir découvert le service Web (390).
